Europäisches Patentamt

European Patent Office

Office européen des brevets

(19)

(11) Veröffentlichungsnummer: **0 325 955**
**A1**

## (12) EUROPÄISCHE PATENTANMELDUNG

(21) Anmeldenummer: 89100463.2

(22) Anmeldetag: 12.01.89

(51) Int. Cl.⁴: **C08K 7/28 , C08L 27/12**

(30) Priorität: 23.01.88 DE 3801912

(43) Veröffentlichungstag der Anmeldung:
02.08.89 Patentblatt 89/31

(84) Benannte Vertragsstaaten:
DE FR GB IT NL

(71) Anmelder: HOECHST AKTIENGESELLSCHAFT
Postfach 80 03 20
D-6230 Frankfurt am Main 80(DE)

(72) Erfinder: Fitz, Herbert, Dr.
Kantstrasse 41
D-8269 Burgkirchen(DE)

(54) Lichtdurchlässiger, wärmedämmender Formkörper und Verfahren zu seiner Herstellung.

(57) Es wird ein lichtdurchlässiger, wärmedämmender Formkörper beschrieben, der aus kugelförmigen oder zylindrischen hohlen Glaskörpern und einer die Glaskörper festverbindenden Schicht aus mindestens einem fluorierten Polymeren besteht. Die Glaskörper haben einen Außendurchmesser von 1 bis 25 mm und, sofern sie zylindrisch sind, eine Länge, die das 1- bis 25fache des Durchmessers beträgt. Das Glas umschließt den Hohlraum in den Glaskörpern vollständig. Glaskörper und fluoriertes Polymeres, das in Pulverform oder als flüssige Dispersion vorliegt, werden gemischt, in eine Form gegeben und auf eine Temperatur, die oberhalb der Schmelztemperatur beziehungsweise dem Kristallitschmelzpunkt des fluorierten Polymeren liegt, erwärmt, anschließend in der Form auf eine Temperatur unter 100 °C abgekühlt. Es werden so stabile Formkörper von guter Lichtdurchlässigkeit und Beständigkeit erhalten, die ein günstiges Verhältnis von fluorierten Polymeren zu eingesetzten Glaskörpern zeigen.

EP 0 325 955 A1

## Lichtdurchlässiger, wärmedämmender Formkörper und Verfahren zu seiner Herstellung

Die Erfindung betrifft einen lichtdurchlässigen, wärmedämmenden Formkörper, der aus hohlen Glaskörpern und die einer Glaskörper verbindenden Schicht aus mindestens einem fluorierten Polymeren besteht und ein Verfahren zu seiner Herstellung.

Lichtdurchlässige, wärmedämmende Formkörper, beispielsweise in flächiger Gestalt, gewinnen als Wärmedämmschichten im Zusammenhang mit der passiven Solarnutzung, das heißt der Umsetzung von Tageslicht in Wärme, zunehmend an Bedeutung. Im Bausektor werden solche lichtdurchlässigen Wärmedämmschichten besonders für Außenwände (Fassaden) und Dächer benützt. Die gewünschten Eigenschaften für solche Anwendungen sind möglichst hoher Lichtdurchlaß (≥ 20 %) bei gleichzeitig guter thermischer Isolation (thermischer Isolations-K-Wert < 2 W/m²K), möglichst geringe Schichtdicke (≤ 3 cm) sowie breiter Temperatureinsatzbereich (-50 bis ≥ 80 °C). Die für Dämmschichten eingesetzten Formkörper sollen mechanisch stabil, selbsttragend, unbrennbar oder zumindest schwer entflammbar sein, kein Wasser aufnehmen und eine Licht- und Witterungsbeständigkeit zeigen, die eine Verwendung für lange Zeit (mindestens 10 bis 20 Jahre) ermöglicht. Es ist ferner von Vorteil, wenn die Formkörper einfach in den verschiedensten Formen hergestellt werden können und ein vergleichsweise geringes Gewicht haben.

Seit langem bekannte Konstruktionen, wie zum Beispiel Mehrfachverglasungen mit Glasplatten und Glasbausteinen, zeigen zwar gute Beständigkeit, haben aber hohes Gewicht und sind vergleichsweise schwierig in anderer Form als in ebenen Platten herstellbar. Mehrfach-Kunststoffplatten, Kunststoffhohlkammerprofilplatten und in einem Abstand von zum Beispiel 20 bis 30 mm mehrfach angeordnete Kunststoffolien haben zwar geringes Gewicht, sind jedoch häufig nicht unbrennbar und lassen in der Licht- beziehungsweise Witterungsbeständigkeit, bisweilen auch in der mechanischen Stabilität, zu wünschen übrig.

Neuere Entwicklungen verwenden als lichtdurchlässige Wärmedämmschichten Kapillarstrukturen aus Kunststoffen, transluzenten Kunststoffschäumen, offene mattenartige Glasfaservliese, die meist zwischen Glas und Kunststoffplatten in einem Abstand von 20 bis 30 mm, häufig auch mehr, angeordnet sind. Aus DE-OS 23 15 259 ist ein beschichtetes Gewebe, das von Luft getragen werden kann, bekannt, bestehend aus einem Gewebesubstrat, von dem mindestens eine Seite mit einer Mischung aus etwa 50 bis 90 Gew.-% eines polymeren Materials, das Tetrafluorethyleneinheiten in überwiegender Menge enthält, und etwa 50 bis 10 Gew.-% Glasperlen beschichtet ist. Die Perlen können hohl sein und in ihrer Größe zwischen 4 und 800 μm variieren, wobei feinere Glasperlen, das heißt solche, deren Größe zwischen 4 und 75 μ variiert, bevorzugt sind. Solche Produkte sind flexibel, das heißt nicht formstabil, in der Herstellung aufwendig, da erst ein entsprechendes Substratgewebe erzeugt werden muß, das anschließend mit einer Schicht versehen wird, die auf ihr Volumen bezogen verhältnismäßig viel des teuren fluorierten Polymeren enthält. Die Lichtdurchlässigkeit dieser Produkte liegt bei 15 % oder niedriger.

Neben der genannten DE-OS gibt es eine Reihe weiterer Schriften, die Beschichtungen aus Mischung von fluorierten Polymeren mit gegebenenfalls hohlen Glaskugeln beschreiben. Die Größe dieser Glaskugeln ist in der Regel mit 20 bis etwa 150 μm, in Ausnahmefällen bis 500 μm, angegeben, in der Regel enthalten diese Schichten einen überwiegenden Anteil an fluorierten Polymeren, bisweilen sind weitere Zusatzstoffe, beispielsweise Präparationsmittel, erforderlich.

Es wurden nun lichtdurchlässige, wärmedämmende Formkörper gefunden, die mechanisch stabil sind, leicht in verschiedenen Formen erzeugt werden können, mit einem günstigen Verhältnis von fluorierten Polymeren zu preiswerterem Füllstoff ohne weitere Zusatzstoffe wie Präparationsmittel hergestellt werden können, wobei sie die oben genannten Eigenschaften erfüllen und insbesondere im Hinblick auf vergleichbare bekannte technische Lösungen eine gute Lichtdurchlässigkeit aufweisen.

Der neue lichtdurchlässige, wärmedämmende Formkörper, bestehend aus hohlen Glaskörpern und einer die Glaskörper festverbindenden Schicht aus mindestens einem fluorierten Polymeren, ist dadurch gekennzeichnet, daß die hohlen Glaskörper kugelförmig oder zylindrisch ausgebildet sind, einen Außendurchmesser von 1 bis 25 mm und, sofern sie zylindrisch sind, eine Länge, die das 1- bis 25fache des Durchmessers beträgt, aufweisen, wobei das Glas den Hohlraum vollständig umschließt.

Werden hohle Glaskörper mit einem Außendurchmesser von unter 1 mm verwendet, läßt die Lichtdurchlässigkeit der Formkörper nach, beträgt der Außendurchmesser der hohlen Glaskörper mehr als 25 mm, so können im allgemeinen keine ausreichend dünnen Platten mehr erzeugt werden, auch treten in zunehmendem Maße Stabilitätsschwierigkeiten auf. Vorzugsweise beträgt der Außendurchmesser der hohlen Glaskörper 2 bis 12 mm. Zweckmäßig haben die hohlen Glaskörper kugelförmige oder zylindrische Gestalt, da diese am leichtesten herstellbar ist. Es können jedoch auch hohle Glaskörper verwendet werden, die andere Formen aufweisen, beispielsweise die eines Kegels oder Kegelstumpfes und vor allem solche, die der Kugel- beziehungsweise Zylindergestalt ähnlich sind, wie zum Beispiel Ellipsoide oder faßförmige Körper.

Sofern die hohlen Glaskörper zylindrisch sind, soll ihre Länge das 1- bis 25fache ihres Durchmessers betragen, wobei allerdings eine Gesamtlänge der Körper von 250 mm aus Zweckmäßigkeitsgründen nicht überschritten werden sollte. Vorzugsweise beträgt die Länge der zylindrischen, hohlen Glaskörper das 1- bis 4fache ihres Durchmessers.

Als Glas ist jedes mineralische Glas geeignet. Um besondere Effekte zu erzielen, kann es durchsichtig eingefärbt sein, vorzugsweise wird aber farbloses Normalglas verwendet oder solches, das Verbindungen enthält, die die Absorption von ultravioletten oder Wärmestrahlen erhöhen. In einer bevorzugten Ausführungsform werden Glaskörper verwendet, deren Hohlraum mit mindestens einer gasförmigen Verbindung gefüllt ist, die die Wärme- und/oder schalldämmenden Eigenschaften der Glaskörper erhöht, insbesondere solche gasförmigen Verbindungen, die bei 98 kPa unter -35 °C sieden und ausgewählt sind aus der Gruppe fluorierte, gegebenenfalls Chlor enthaltende Kohlenwasserstoffe und Schwefelhexafluorid.

In einer weiteren bevorzugten Ausführungsform ist der Hohlraum in den Glaskörpern evakuiert. In diesem Falle ist ein Druck im Hohlraum des Glaskörpers von etwa 0,1 bis 2 kPa zweckmäßig.

Sofern zylindrische Glaskörper verwendet werden, worunter auch solche zu verstehen sind, deren Boden und Deckfläche gewölbt, beispielsweise in Form eines Kugelabschnitts ist sowie auch faßförmige Hohlkörper, werden diese vorzugsweise im Formkörper mit weitgehend parallelen Zylinderachsen nebeneinanderliegend angeordnet. Hierdurch werden gute Lichtdurchlässigkeiten und ein günstiges Verhältnis von Glaskörper zu fluorierten Polymeren erreicht.

Es können für die Erfindung innerhalb eines Formkörpers auch hohle Glaskörper unterschiedlicher Größe und/oder Gestalt verwendet werden - die Wandstärke der hohlen Glaskörper ist so zu wählen, daß die Glaskörper bei 400 °C einen Druckunterschied zwischen dem Hohlraum und der Umgebung des Glaskörpers von mindestens 150 kPa ohne merkliche Deformation aushalten. Sofern der Hohlraum in den Glaskörpern weitgehend evakuiert ist, kann der bei 400 °C auszuhaltende Druckunterschied auch geringer als 150 kPa sein, sollte aber mindestens 110 kPa betragen. Je nach Einsatzgebiet des Formkörpers wird man im Interesse der mechanischen Stabilität häufig solche hohlen Glaskörper wählen, die bei der Gebrauchstemperatur wesentlich höhere Druckunterschiede als 150 kPa zwischen der äußeren Umgebung und dem Hohlraum aushalten.

Als fluorierte Polymere sind beispielsweise geeignet die Homo- und Copolymerisate des Vinylidenfluorids, Chlortrifluorethens oder Tetrafluorethens. Vorzugsweise werden solche fluorierten Polymere eingesetzt, die thermoplastisch, das heißt aus der Schmelze verarbeitbar sind, und die einen Schmelzbereich aufweisen, der zwischen 110 und etwa 310 °C liegt.

Ferner bevorzugt sind Formkörper, die mindestens ein fluoriertes Copolymeres enthalten, das polymerisierte Einheiten von mindestens zwei der folgenden Monomeren enthält: Tetrafluorethen, Chlortrifluorethen, Vinylidenfluorid, Hexafluorpropen, Perfluorpropyl-Perfluorvinylether, Hexafluorisobuten, Ethen. Außer den zwei genannten Comonomeren kann im fluorierten Polymeren noch ein drittes Comonomeres (Terpolymer) oder auch drittes und viertes Comonomeres (Quaterpolymer) vorliegen. Die weiteren Comonomeren können ebenfalls aus der zuvor genannten Gruppe von Monomeren stammen oder auch andere fluorierte Monomere sein, beispielsweise perfluorierte Olefine der Formel $CF_2 = CF-Rf1$, worin Rf1 ein Perfluoralkylrest mit 2 bis 10, vorzugsweise 2 bis 5 C-Atomen, ist; perfluorierte Vinylether der Formel $CF_2 = CF-O-Rf2$, worin Rf2 ein Perfluoralkylrest mit 1, 2 oder 4 bis 10, vorzugsweise 1, 2 oder 4 C-Atomen, ist; 3,3,3-Trifluor-2-trifluormethylpropylen. Solche fluorierten Copolymerisate aus 2, 3 oder 4 Comonomeren sind beispielsweise beschrieben in BE-PS 844 965; US-PS 3,235,537; EP-OS 2 890; US-PS 2,468,664; 3,817,951; 3,960,825; 3,624,250; 3,450,684; 3,847,881; 2,975,161; 3,380,971; 3,303,154; 4,381,387; GB-PS 1 355 595; 872 308; 1 188 889, den deutschen Offenlegungsschriften 26 35 402; 24 57 102, der europäischen Patentschrift 50 437 sowie aus US-PS 3,006,881; 3,051,677; 3,136,745 und 2,968,649.

In einer weiteren bevorzugten Ausführungsform enthält der Formkörper als fluoriertes Polymeres ein gegebenenfalls modifiziertes Polytetrafluorethylen. Hierunter ist entweder ein Polytetrafluorethylen-Homopolymerisat zu verstehen oder ein Polytetrafluorethylen-Copolymerisat, das maximal 2, vorzugsweise weniger als 1 Mol-%, bezogen auf das Polymerisat, von einem oder mehreren Comonomeren, beispielsweise den weiter oben genannten, enthält. Solche Polymerisate sind nicht thermoplastisch, das heißt aus der Schmelze nicht verarbeitbar.

Der Formkörper kann auch Mischungen von mehreren fluorierten Polymeren enthalten. Das oder die Polymere können mit Füllstoffen zur Verstärkung, vorzugsweise mit durchsichtigen Füllstoffen, wie geschnittenen Glasfasern in verschiedenster Form, Geweben, Vliesen, sowie auch Vollglaskörpern verschiedener Gestalt, beispielsweise Kugeln von 10 bis 150 μm Durchmesser, gemischt sein.

Ferner können die erfindungsgemäßen Formkörper als Auflage oder Zwischenlage vorhanden sein, in Verbindung mit den verschiedensten durchsichtigen beziehungsweise durchscheinenden Materialien, wie Platten, Vliese, Gitter, Gewebe oder Gewirke aus Glas beziehungsweise Glasfasern sowie auch Gitter oder ähnliche Konstruktionen, beispielsweise aus dünnen Metallfäden.

Gegenstand der Erfindung ist ferner ein Verfahren zur Herstellung eines lichtdurchlässigen, wärmedämmenden Formkörpers, wie vorstehend beschrieben, das dadurch gekennzeichnet ist, daß auf 1 000 cm³ Schüttvolumen von hohlen Glaskörpern, die kugelförmig oder zylindrisch ausgebildet sind, einen Außendurchmesser von 1 bis 25 mm und, sofern sie zylindrisch sind, eine Länge, die das 1- bis 25fache des Durchmessers beträgt, aufweisen, wobei das Glas den Hohlraum vollständig umschließt, 10 bis 200 g von mindestens einem fluorierten Polymeren, das eine Korngröße von 0,1 bis 500 μm aufweist und als Pulver oder als flüssige Dispersion vorliegt, miteinander vermischt werden, diese Mischung in eine Form gegeben oder in einer Form erzeugt wird, in dieser Form bis über den Schmelzpunkt oder Kristallitschmelzpunkt des fluorierten Polymeren, jedoch nicht über 400 °C erwärmt, anschließend auf eine Temperatur unter 100 °C abgekühlt und der so gebildete Formkörper der Form entnommen wird.

Die für das erfindungsgemäße Verfahren zu verwendenden hohlen Glaskörper und fluorierten Polymeren sind weiter oben beschrieben. Die Herstellung der Formkörper erfolgt zweckmäßig so, daß das fluorierte Polymere in Pulverform in einem Mischaggregat, beispielsweise einer Mischtrommel, auf die hohlen Glaskörper aufgebracht wird, die so erzeugte Mischung in eine geeignete Form, beispielsweise aus Metall, gefüllt und darin über den Schmelzpunkt beziehungsweise den Kristallitschmelzpunkt des fluorierten Polymeren erwärmt und eine bestimmte Zeit, beispielsweise 5 bis 300, vorzugsweise 10 bis 90 Minuten, gehalten wird. Danach erfolgt Abkühlung auf unter 100 °C und Entformen. Sofern eine flüssige Dispersion, beispielsweise eine wäßrige Dispersion, beziehungsweise Suspension des Fluorpolymeren verwendet wird, erfolgt die Verfahrensweise ähnlich. Die hohlen Glaskörper werden mit der Dispersion gemischt, in eine Form gegeben, die flüssige Phase, beispielsweise das Wasser, aus der Dispersion verdampft, anschließend auf eine Temperatur oberhalb des Schmelzpunktes beziehungsweise Kristallitschmelzpunktes des Polymeren erwärmt und weiter verfahren, wie oben beschrieben. Die Mischung der hohlen Glaskörper mit dem Polymeren gleichviel, ob es als Pulver oder als flüssige Dispersion vorliegt, kann auch in der Form, die zur Herstellung des Formkörpers dient, erfolgen. Sofern mehrere fluorierte Polymere in Mischung miteinander sowie auch in Mischung mit den weiter oben genannten Füllstoffen verwendet werden sollen, werden diese Mischungen zweckmäßig vor Zugabe zu den hohlen Glaskörpern in bekannter Weise erzeugt.

Werden auf 1 000 cm³ Schüttvolumen der hohlen Glaskörper weniger als 10 g vom fluorierten Polymeren eingesetzt, wird keine ausreichende Bindung zwischen den hohlen Glaskörpern mehr erzielt. Ein Einsatz von über 200 g des fluorierten Polymeren je 1 000 cm³ Schüttvolumen der hohlen Glaskörper ist zwar prinziell möglich, bringt aber im allgemeinen keine Vorteile, die den höheren Materialkostenaufwand rechtfertigen würden. Vorzugsweise werden für 1 000 cm³ Schüttvolumen von hohlen Glaskörpern 20 bis 80 g von mindestens einem fluorierten Polymeren eingesetzt.

Die Korngröße des fluorierten Polymeren liegt, wenn es sich um eine Dispersion handelt, etwa zwischen 0,1 bis 0,8 μm, bei einem Pulver etwa zwischen 20 und 500 μm, bevorzugt sollte das fluorierte Polymere eine Korngröße von 0,2 bis 150 μm aufweisen.

Mit den weiter oben genannten Substraten können die erfindungsgemäßen Formkörper bereits während ihrer Herstellung verbunden werden, beispielsweise dadurch, daß man die Substrate in die Form einlegt, in die das Gemisch aus fluorierten Polymeren und hohlen Glaskörpern eingetragen wird, wobei das Substrat, beispielsweise eine Glasplatte, auch einen Teil der Form selbst darstellen kann.

Wie bereits eingangs ausgeführt, zeigen die erfindungsgemäßen Formkörper eine günstige Eigenschaftskombination und insbesondere verglichen mit ähnlichen bekannten Konstruktionen eine gute Lichtdurchlässigkeit. Sie können für die verschiedensten Zwecke, vor allem im Bausektor, verwendet werden. In Folge des unerwartet günstigen Verhältnisses von fluorierten Polymeren zu den hohlen Glaskörpern sind die Formkörper kostengünstig herstellbar.

Nachfolgende Beispiele sollen die Erfindung näher erläutern:


Beispiel 1

In einem Meßzylinder werden 1 000 cm³ hohle Glaskugeln, die einen Außendurchmesser von 3 bis 4 mm aufweisen, abgemessen, in eine Rollflasche gegeben, mit 25 g eines thermoplastisch aus der Schmelze verarbeitbaren Fluorpolymerpulvers gemischt und 30 Minuten gerollt. Das fluorierte Polymere besteht aus polymerisierten Einheiten des Tetrafluorethens, Ethens und Hexafluorpropens, hat einen Korndurchmesser von 30 bis 150 μm und einen Schmelzbereich von 200 bis 220 °C. Die durch die Behandlung in der Rollflasche mit dem Fluorpolymeren beschichteten hohlen Glaskugeln werden nun in eine heizbare Metallplattenform mit einem Plattenabstand von 20 mm gefüllt, auf eine Temperatur von 260 °C erwärmt und während 60 Minuten bei dieser Temperatur gehalten. Nun wird die Metallform auf eine Temperatur unter 100 °C abgekühlt und die geformte Platte der Form entnommen. An dieser Platte werden folgende Messungen durchgeführt: Gesamtlichtdurchlässigkeit 45 %, Bruchfestigkeit 17 N (Prüfkörper: Dicke 20 mm, Breite 25 mm, Stützweite 64 mm, Prüftemperatur 23 °C), thermischer Isolations-K-Wert 1,608 W/m²K.

Beispiel 2

Es wird verfahren wie in Beispiel 1 beschrieben, jedoch werden hohle Glaskugeln verwendet, die einen Durchmesser von 4 bis 5 mm aufweisen. An Stelle des in Beispiel 1 eingesetzten thermoplastisch aus der Schmelze verarbeitbaren fluorierten Polymeren, wird ein solches verwendet, das aus polymerisierten Einheiten des Tetrafluorethens, Hexafluorpropens und Vinylidenfluorids besteht, eine Korngröße von 100 bis 150 μm und einen Schmelzbereich von 150 bis 170 °C aufweist. Die, wie in Beispiel 1 beschrieben, durch Rollen in einer Flasche mit dem fluorierten Polymerpulver beschichteten hohlen Glaskugeln werden in eine heizbare Form zwischen zwei Glasplatten von 2 mm Stärke, die in einem Abstand von 23 mm parallel zueinander angeordnet sind, eingefüllt und bei einem Anpreßdruck von 150 g/dm² auf 230 °C erwärmt und 15 Minuten bei dieser Temperatur gehalten. Anschließend wird auf unter 100 °C abgekühlt und entformt. Der Verbund aus dem erfindungsgemäßen Formkörper und den beiden Glasplatten zeigt bei einer Gesamtstärke von 27 mm eine Lichtdurchlässigkeit von 54 % und einen thermischen Isolations-K-Wert von 1,87 W/m²K.

Beispiel 3

In einem Meßzylinder werden 200 cm³ hohle Glaskugeln, die einen äußeren Durchmesser von 4 bis 5 mm aufweisen, abgemessen, in ein Rührgefäß gegeben und mit 500 cm³ einer 60 Gew.-% Feststoff enthaltenden wäßrigen Dispersion eines fluorierten Polymeren durch Rühren bei Raumtemperatur behandelt, anschließend die Hauptmenge der Dispersion durch Absaugen entfernt. Das dispergierte, fluorierte Polymere beteht im wesentlichen aus polymerisierten Einheiten des Tetrafluorethens und ist mit weniger als 1 Mol-%, bezogen auf das Polymere, mit polymerisierten Einheiten des Hexafluorpropens modifiziert, es hat in der wäßrigen Dispersion einen Korndurchmesser der Primärteilchen von 0,2 bis 0,6 μm und einen Kristallitschmelzpunkt von 327 °C. Die mit der wäßrigen Dispersion beschichteten Glaskugeln werden in eine teilbare Form aus Aluminiumplatten, die in einem Abstand von 25 mm parallel zueinander angeordnet sind, gefüllt, im Ofen getrocknet, anschließend auf 380 °C erwärmt, eine Stunde bei dieser Temperatur gehalten, dann unter 100 °C abgekühlt und der Formkörper entnommen. Es wird eine Platte von 22 mm Stärke erhalten, die eine gute mechanische Stabilität und eine Lichtdurchlässigkeit von 35 % zeigt. Das Gewicht der hohlen Glaskugeln vor der Behandlung mit der wäßrigen Dispersion sowie das Gewicht der fertigen Platte wird festgestellt, die Gewichtszunahme beträgt 7 g, daraus ergibt sich ein Anteil von 35 g fluoriertem Polymeren je 1 000 cm³ Schüttvolumen der hohlen Glaskugeln.

Beispiel 4

In eine Metallform von 20 cm Breite, 20 cm Länge und 50 cm Tiefe, die einen Siebboden enthält, werden zylinderförmige Hohlglaskörper von 10 mm Durchmesser und 20 mm Länge mit weitgehend parallelen Zylinderachsen nebeneinander senkrecht auf dem Siebboden stehend angeordnet. Das Schüttvolumen dieser in dichtester Packung angeordneten hohlen Glaskörper beträgt 800 cm³. Die so beschickte Metallform wird nun mit einer 60 Gew.-% eines fluorierten Polymeren enthaltenden wäßrigen Dispersion geflutet. Das fluorierte Polymere besteht zu einem großen Teil aus polymerisierten Einheiten des Tetrafluorethens und einem geringen Anteil polymerisierten Einheiten des Hexafluorpropens und des Perfluorpropylperfluorvinylethers, es zeigt in der Dispersion eine Primärteilchengröße von 0,1 bis 0,3 μm und einen Schmelzbereich des trocknen Polymeren von 304 bis 307 °C. Nach dem Fluten der Metallform wird die überschüssige wäßrige Dispersion durch den Siebboden ablaufen gelassen, der Inhalt der Metallform in einem Ofen getrocknet, anschließend auf 360 °C erwärmt, 40 Minuten bei dieser Temperatur gehalten, dann unter 100 °C abgekühlt und die so entstandene stabile Platte der Form entnommen. Dieser Formkörper zeigt in Richtung der Zylinderachse der zylinderförmigen Hohlglaskörper eine Lichtdurchlässigkeit von 62 %. Die leere und die mit den zylinderförmigen Hohlglaskörpern gefüllte Metallform wird vor dem Fluten mit der wäßrigen Dispersion gewogen, ebenso der fertige Formkörper. Er zeigt gegenüber dem Gewicht der eingesetzten Hohlglaskörper eine Zunahme von 48 g. Unter Berücksichtigung des Schüttvolumens von 800 cm³ entspricht das 60 g trockenem Polymeren je 1 000 cm³ Schüttvolumen der Hohlglaskörper.

In den Beispielen 1 bis 4 werden Glaskörper verwendet,bei denen das Glas den Hohlraum,der mit Luft gefüllt ist, vollständig umschließt.

**Ansprüche**

1. Lichtdurchlässiger, wärmedämmender Formkörper bestehend aus hohlen Glaskörpern und einer die Glaskörper fest verbindenden Schicht aus mindestens einem fluorierten Polymeren, dadurch gekennzeichnet, daß die hohlen Glaskörper kugelförmig oder zylindrisch ausgebildet sind, einen Außendurchmesser von 1 bis 25 mm und, sofern sie zylindrisch sind, eine Länge, die das 1- bis 25fache des Durchmessers beträgt, aufweisen, wobei das Glas den Hohlraum vollständig umschließt.

2. Formkörper nach Anspruch 1, dadurch gekennzeichnet, daß mindestens ein thermoplastisch aus der Schmelze verarbeitbares fluoriertes Polymeres eingesetzt wird, das einen Schmelzbereich aufweist, der zwischen 110 und 310 °C liegt.

3. Formkörper nach Anspruch 2, dadurch gekennzeichnet, daß mindestens ein fluoriertes Copolymeres eingesetzt wird, das polymerisierte Einheiten von mindestens zwei der folgenden Monomeren enthält:
Tetrafluorethen, Chlortrifluorethen, Hexafluorpropen, Perfluorpropylperfluorvinylether, Hexafluorisobuten, Vinylidenfluorid, Ethen.

4. Formkörper nach Anspruch 1, dadurch gekennzeichnet, daß als fluoriertes Polymeres ein gegebenenfalls modifiziertes Polytetrafluorethen eingesetzt wird.

5. Formkörper nach einem oder mehreren der Ansprüche 1 bis 4, dadurch gekennzeichnet, daß der Außendurchmesser der hohlen Glaskörper 2 bis 12 mm beträgt.

6. Formkörper nach einem oder mehreren der Ansprüche 1 bis 5, dadurch gekennzeichnet, daß der Hohlraum der Glaskörper evakuiert ist.

7. Formkörper nach einem oder mehreren der Ansprüche 1 bis 6, dadurch gekennzeichnet, daß der Hohlraum in den Glaskörpern mit mindestens einer gasförmigen Verbindung gefüllt ist, die bei 98 kPa unter -35 °C siedet und ausgewählt ist aus der Gruppe: fluorierte, gegebenenfalls Chlor enthaltende Kohlenwasserstoffe und Schwefelhexafluorid.

8. Formkörper nach einem oder mehreren der Ansprüche 1 bis 7, dadurch gekennzeichnet, daß zylindrische Glaskörper eingesetzt werden, die mit weitgehend parallelen Zylinderachsen nebeneinander angeordnet sind.

9. Verfahren zur Herstellung eines Formkörpers nach Anspruch 1, dadurch gekennzeichnet, daß auf 1 000 cm³ Schüttvolumen von hohlen Glaskörpern, die kugelförmig oder zylindrisch ausgebildet sind, einen Außendurchmesser von 1 bis 25 mm und, sofern sie zylindrisch sind, eine Länge, die das 1- bis 25fache des Durchmessers beträgt, aufweisen, wobei das Glas den Hohlraum vollständig umschließt, 10 bis 200 g von mindestens einem fluorierten Polymeren, das eine Korngröße von 0,1 bis 500 µm aufweist und als Pulver oder als flüssige Dispersion vorliegt, miteinander vermischt werden, diese Mischung in eine Form gegeben oder in einer Form erzeugt wird, in dieser Form bis über den Schmelzpunkt oder Kristallitschmelzpunkt des fluorierten Polymeren, jedoch nicht über 400 °C erwärmt, anschließend auf eine Temperatur unter 100 °C abkühlt und der so gebildete Formkörper der Form entnommen wird.

10. Verfahren nach Anspruch 9, dadurch gekennzeichnet, daß für 1 000 cm³ Schüttvolumen von hohlen Glaskörpern 20 bis 80 g von mindestens einem fluorierten Polymeren verwendet werden.

11. Verfahren nach Anspruch 9 oder 10, dadurch gekennzeichnet, daß das fluorierte Polymere eine Korngröße von 0,2 bis 150 µm aufweist.

12. Verfahren nach einem oder mehreren der Ansprüche 9 bis 11, dadurch gekennzeichnet, daß der Durchmesser der hohlen Glaskörper 2 bis 12 mm beträgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-2 315 259 (PENNWALT CORP.)<br>* Ansprüche 7,6; Seite 5, Zeilen 26-31 *<br><br>-----  | 1-4 | C 08 K 7/28<br>C 08 L 27/12 |

|  |
|---|
| **RECHERCHIERTE SACHGEBIETE (Int. Cl.4)**<br><br>C 08 K<br>C 08 L |

**Der vorliegende Recherchenbericht wurde für alle Patentansprüche erstellt**

| Recherchenort | Abschlußdatum der Recherche | Prüfer |
|---|---|---|
| DEN HAAG | 24-04-1989 | HOFFMANN K.W. |

EPO FORM 1503 03.82 (P0403)